# EUROPÄISCHE PATENTSCHRIFT

(11) **EP 2 931 977 B1**
(45) Veröffentlichungstag und Bekanntmachung des Hinweises auf die Patenterteilung: **10.01.2018**
(21) Anmeldenummer: 13794810.5
(22) Anmeldetag: 13.11.2013
(51) Int. Cl.: E02B 17/00, E02D 27/42, E02D 27/12

(54) **VERFAHREN ZUR VERANKERUNG EINER GRÜNDUNGSSTRUKTUR UND GRÜNDUNGSSTRUKTUR**
METHOD FOR ANCHORING A FOUNDATION STRUCTURE, AND FOUNDATION STRUCTURE
PROCÉDÉ D'ANCRAGE D'UNE STRUCTURE DE FONDATION ET STRUCTURE DE FONDATION

(30) Priorität: 14.12.2012 DE 102012024412
(43) Veröffentlichungstag der Anmeldung: 21.10.2015
(60) Teilanmeldung: 17162318.4
(73) Patentinhaber: Senvion GmbH, 22297 Hamburg (DE)
(72) Erfinder: SEIDEL, Marc, 49082 Osnabrück (DE); ALBRECHT, Victor, 49080 Osnabrück (DE)
(74) Vertreter: Glawe, Delfs, Moll
(86) Internationale Anmeldenummer: PCT/EP2013/003411
(87) Internationale Veröffentlichungsnummer: WO 2014/090361

(56) Entgegenhaltungen:
- DE-A1- 10 330 963
- GB-A- 1 497 080
- US-A1- 2005 286 979
- US-A1- 2011 138 731

## Beschreibung

Die Erfindung betrifft ein Verfahren zum Verankern einer Gründungsstruktur einer Windenergieanlage, insbesondere zum Verankern einer Gründungstruktur für eine Offshore-Windenergieanlage im Meeresboden, mit den Schritten: Einbringen von wenigstens einer Aufnahmestruktur in den Boden, insbesondere in den Meeresboden, Absenken wenigstens eines Tragpfostens der Gründungsstruktur in die wenigstens eine Aufnahmestruktur, Herstellen einer Verbindung zwischen Aufnahme- und Gründungsstruktur durch Verfüllen der Aufnahmestruktur mit einer aushärtbaren Füllmasse und Aushärten der aushärtbaren Füllmasse.

Die Erfindung betrifft weiterhin eine Gründungsstruktur insbesondere zur Verankerung im Meeresboden mit wenigstens einem in eine Aufnahmestruktur einzuführenden Tragpfosten.

Ein solches Verfahren findet unter anderem bei der Verankerung von Offshore-Windenergieanlagen auf dem Meeresboden Anwendung. Das Verfüllen der Auf nahmestruktur, z.B. gebildet von Hohlpfählen, mit einer abbindenden Füllmasse, z.B. ein Mörtel oder Beton, wird als Vergrouten bezeichnet. Dabei wird z.B. ein an der dem Meeresboden abgewandten Seite hohler Pfahl als Aufnahmestruktur in den Meeresboden eingebracht (z.B. gebohrt oder gerammt). Insbesondere auf felsigem Untergrund kann auch eine Bohrung als Aufnahmestruktur in den Untergrund eingebracht werden. Abhängig von der Größe der zu befestigenden Windenergieanlage sind unterschiedliche Gründungsstrukturen bekannt. Dies sind vor allem aus einem Tragpfosten bestehende sogenannte Monopiles, drei Tragpfosten aufweisende Tripods sowie drei oder mehr Tragpfosten (auch Eckstiele genannt) aufweisende sogenannte Jackets.
Da sich die Gründungsstruktur der Windenergieanlage während des Verankerungsverfahrens zum Teil unter Wasser und zum Teil über Wasser befindet ist sie der Einwirkung des Wellengangs ausgesetzt. Für die Tragfähigkeit der Groutverbindung zwischen Aufnahmestruktur und Gründungsstruktur ist es jedoch entscheidend, dass während der Aushärtung der aushärtbaren Füllmasse (des Grouts), bei der es sich zumeist um hochfesten Beton handelt, keine oder nur geringe Relativbewegung zwischen der Aufnahmestruktur und z.B. dem in die Aufnahmestruktur eingesetzten Tragpfosten stattfindet. So wird z.B. in der WO 2011/010937 A1 eine maximale Bewegung von 3 mm als zulässig angegeben.
Die WO 2011/010937 A1 beschreibt ein Verfahren zum Verankern von mehreren Tragpfosten einer Struktur in mehreren aufnehmenden Pfählen, wobei die Tragpfosten mit Konsolen ausgestattet sind, welche sich beim Einführen der Tragpfosten in die Pfähle auf den Pfahlöffnungen abstützen. Um leichte Höhenunterschiede zwischen den Pfahlöffnungen benachbarter Pfähle abfangen zu können, sind an den Konsolen elastische Puffer vorgesehen. Durch diese Konstruktion soll verhindert werden, dass Gründungsstrukturen mit mehr als drei Tragpfosten störende und die Tragfestigkeit herabsetzende Kippbewegungen ausführen. GB 1 497 080 offenbart ein Verfahren zum Verankern einer Gründungsstruktur nach dem Oberbegriff des Anspruchs 1 sowie eine Gründungsstruktur nach dem Oberbegriff des Anspruchs 7. Darin ist eine Aufnahmestruktur am Meeresgrund vorsehen, in welche ein Tragpfosten abgesenkt wird. Dabei entsteht ein Ringspalt zwischen dem Tragpfosten und der Aufnahmestruktur, der mit einer aushärtenden Füllmasse verfüllt wird. Vor dem Verfüllen muss der Tragpfosten in der Aufnahmestruktur durch Einsetzen von Keilen in einer gewünschten Position fixiert werden, wobei dann die Teile festgeschweißt werden. Dies kann zuverlässig und positionsgenau nur bei ruhiger See erfolgen.

Ferner ist aus der US 2005/286979 A1 eine Gründungstruktur einer Offshore-Windenergieanlage bekannt, die eine Aufnahmestruktur im Meeresboden vorsieht, in die Tragpfosten der Gründungstruktur abgesenkt wird. Eine dauerhafte Verbindung zwischen der Aufnahmestruktur und dem Tragpfosten wird durch Verfüllen mit einer Füllmasse und Aushärten der Füllmasse erreicht. Vor dem Verfüllen wird der Tragpfosten in der Aufnahmestruktur ausgerichtet und fixiert durch spezielle Ausrichteinrichtungen. Diese Ausrichteinrichtungen sind spezielle Konstruktionen mit einer Mehrzahl von Hydraulikzylindern; sie werden montiert und so lange verstellt, bis die Tragpfosten in der gewünschten Weise ausgerichtet sind und behalten dann ihre Position bei. Nach dem Aushärten können sie entfernt werden. Der zusätzliche Antransport der speziellen Ausrichteinrichtungen und deren präzise Montage sind weitere Arbeitsschritte, die bei ruhigen Wetterbedingungen durchzuführen sind. Dies gilt auch für den Abtransport der Ausrichteinrichtungen, was eine zusätzliche Komplikation schafft.

Derzeit kann aufgrund der negativen Auswirkungen von Relativbewegungen in der Aushärtphase eine Verankerung von Gründungsstrukturen für Windenergieanlagen am Meeresboden nur bei ruhiger See ausgeführt werden. Dadurch kann sich die Verankerung teilweise erheblich verzögern, weil auf geeignete Bedingungen gewartet werden muss und sie ist sogar in typischen Schlechtwetterperioden ganz unmöglich.

Es besteht daher eine Aufgabe der vorliegenden Erfindung darin, ein Verfahren zum Verankern einer Gründungsstruktur einer Windenergieanlage im Meeresboden bereit zu stellen, welches weniger wetterabhängig und weniger anfällig gegen Wellengang ist. Weiterhin besteht eine Aufgabe der Erfindung darin, eine Gründungsstruktur für eine Windenergieanlage zur Verankerung im Meeresboden bereitzustellen, welche für eine Verankerung nach einem weniger anfälligen Verfahren besonders geeignet ist.

Diese Aufgabe wird gemäß der Erfindung gelöst durch ein Verfahren zum Verankern einer Gründungsstruktur einer Windenergieanlage im Meeresboden mit den Schritten: Einbringen von wenigstens einer Aufnahmestruktur in den Meeresboden, Absenken wenigstens eines Tragpfostens der Gründungsstruktur in die wenigstens eine Aufnahmestruktur, Herstellen einer Verbindung zwischen Aufnahme- und Gründungsstruktur durch Verfüllen der Aufnahmestruktur mit einer aushärtbaren Füllmasse und Aushärten der aushärtbaren Füllmasse, wobei vor dem Verfüllen der Aufnahmestruktur mit der aushärtbaren Füllmasse der Tragpfosten in der Aufnahmestruktur fixiert wird, welches dadurch weitergebildet ist, dass die Fixierung mittels am Tragpfosten angeordneter Fixierungselemente erfolgt, die als elastische, schräg angestellte Bleche ausgeführt sind.

Durch die Fixierung des Tragpfostens in der Aufnahmestruktur mittels der elastischen, schräg angestellten Bleche vor dem Verfüllen mit Grout werden Bewegungen des Tragpfostens relativ zur Aufnahmestruktur während des Aushärtens der aushärtbaren Füllmasse zuverlässig verhindert. Dabei kann die Fixierung so ausgelegt sein, dass sie lediglich die bei normalem bis mittlerem Wellengang auftretenden Kräfte aufnehmen kann, nicht aber zur Aufnahme noch höherer Kräfte geeignet ausgebildet ist, wie dies von der endgültig verankerten Gründungsstruktur verlangt wird. Es wird gewissermaßen zunächst eine provisorische Fixierung vorgenommen, die die Herstellung der endgültigen Verbindung zwischen Aufnahmestruktur und Gründungsstruktur erleichtert.

Wenn die Fixierung gemäß einer besonderen Ausgestaltung der Erfindung mittels am Tragpfosten vorgesehener Fixierungselemente erfolgt, kann diese besonders einfach erfolgen.

Gemäß einer weiteren vorteilhaften Ausgestaltung der Erfindung sind die elastischen, schräg am Tragpfosten angestellten Bleche in Richtung der Längsachse des Tragpfostens gegeneinander höhenversetzt. Die Bleche können nach Art einer Klinke in der Aufnahmestruktur verspannt werden. Unter elastischen Blechen werden im Sinne der Erfindung z.B. Bleche verstanden, die ohne eine bleibende Verformung relativ zum Tragpfosten ausgelenkt werden können. Dies kann über eine elastische Verformung der Bleche oder über eine vorgespannte bewegliche Befestigung erfolgen.

Gemäß einer alternativen Ausgestaltung der Erfindung erfolgt die Fixierung mittels an der Aufnahmestruktur vorgesehener Fixierungselemente. Dies sind bevorzugt ringförmige Stahleinlagen. Besonders im Zusammenwirken mit am Tragpfosten vorgesehenen Fixierungselementen lässt sich so eine sehr zuverlässige Fixierung bewirken.

In einer bevorzugten Weiterbildung der Erfindung wird zum Fixieren eine entgegen der Absenkrichtung des Tragpfostens wirkende Zugkraft auf den Tragpfosten aufgebracht, bevorzugt über zwischen einer Oberkante der Aufnahmestruktur und einer an dem Tragpfosten vorgesehenen Konsole mit der Funktion einer Stopperplatte eingebrachte Spannkeile. Dadurch werden die Fixierungselemente fest gegeneinander oder gegen den Tragpfosten oder gegen die Aufnahmestruktur verspannt und die Fixierung wird besonders sicher.

Die Aufgabe wird weiterhin gelöst durch eine Gründungsstruktur für eine Windenergieanlage zur Verankerung im Meeresboden mit wenigstens einem in eine Aufnahmestruktur einzuführenden Tragpfosten, welche dadurch weitergebildet ist, dass der Tragpfosten Fixierungselemente zur Fixierung in der Aufnahmestruktur aufweist.

Bezüglich weiterer vorteilhafter Ausgestaltungen der Erfindung wird zur Vermeidung von Wiederholungen auf das oben gesagte und die Unteransprüche verwiesen.

Die Erfindung wird nachstehend anhand einiger in den Figuren schematisch und nicht maßstabgerecht dargestellter Ausführungsbeispiele näher erläutert. Es zeigen:
- Fig. 1:: eine schematische Darstellung einer Verankerung einer Windenergieanlage im Meeresboden; und
- Fig. 2:: eine schematische Darstellung einer nach einem erfindungsgemäßen Verfahren herzustellenden Verankerung.

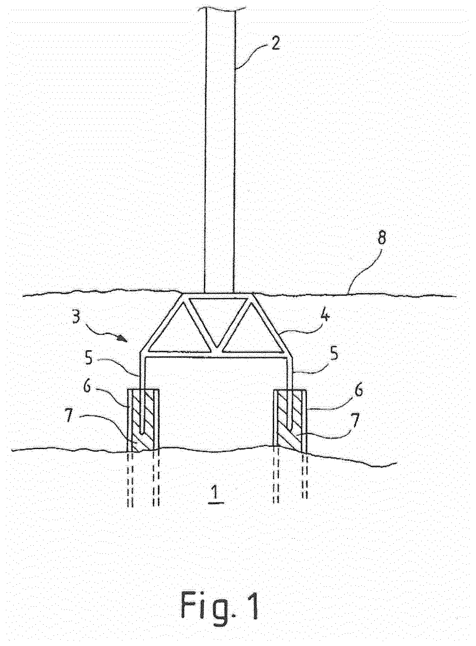

Figur 1 zeigt in einer schematischen Darstellung eine gattungsgemäße Anordnung zur Verankerung einer Offshore-Windenergieanlage im Meeresboden 1. Der Rohrturm 2 der ansonsten nicht dargestellten Windenergieanlage ist auf einer gitterförmigen Gründungsstruktur 3 errichtet. Diese Gründungsstruktur 3 besteht aus einem Gittergerüstkörper 4 und mehreren Tragpfosten 5, die sich in vertikaler Richtung nach unten erstrecken. Abhängig von der Größe der Windenergieanlage kann die Gründungsstruktur als Monopile mit einem Tragpfosten, als Tripod mit drei Tragpfosten oder als Jacket mit drei oder mehr Tragpfosten ausgeführt sein. Im dargestellten Ausführungsbeispiel ist die Gründungsstruktur 3 als Jacket mit vier Tragpfosten 5 ausgeführt, von denen aus Gründen der Übersichtlichkeit nur zwei dargestellt sind. Bei einer Ausführung als Monopile würde der Gerüstkörper 4 entfallen, so dass die Gründungsstruktur lediglich aus dem Tragpfosten selbst bestünde.

Um die Gründungsstruktur 3 im Meeresboden 1 zu verankern sind die Tragpfosten 5 mit ihren freien Enden in Aufnahmestrukturen eingeführt, die im dargestellten Beispiel als hohle Gründungspfähle 6 ausgeführt sind. Diese Gründungspfähle 6 sind in den Meeresboden 1 eingesenkt, dies kann je nach Beschaffenheit des Meeresbodens 1 beispielsweise durch Rammen oder Bohren erfolgen. Insbesondere bei sehr felsigem Meeresboden 1 können an Stelle der Gründungspfähle nicht dargestellte Bohrungen als Aufnahmestruktur in den Boden eingebracht werden.

Um die im Betrieb der Windenergieanlage auftretenden Kräfte aufnehmen zu können, wird nach dem Einführen der Tragpfosten 5 in die Aufnahmestrukturen 6 der dazwischen verbleibende Ringspalt mit einer aushärtbaren Füllmasse 7 verfüllt, welche dann ausgehärtet wird. Dieser Vorgang wird als Vergrouten bezeichnet. Als aushärtbare Füllmasse wird hauptsächlich hochfester Beton verwendet, welcher während der Montage von einem nicht dargestellten Montageschiff aus über eine Groutleitung in die Aufnahmestruktur 6 gepumpt wird.

Die Gründungsstruktur 3 befindet sich teilweise oberhalb und teilweise unterhalb der Wasseroberfläche 8. Während des mehrere Stunden bis Tage dauernden Aushärtens des Betons dürfen sich die Tragpfosten 5 der Gründungsstruktur 3 nicht sehr stark bewegen, da sonst die Festigkeit des Betons beeinträchtigt wird. Bei starkem Seegang kann nach dem Stand der Technik nicht gewährleistet werden, dass keine starken Bewegungen auftreten. Die Bewegungen werden überwiegend durch Wellenbewegungen in die Gründungsstruktur induziert.

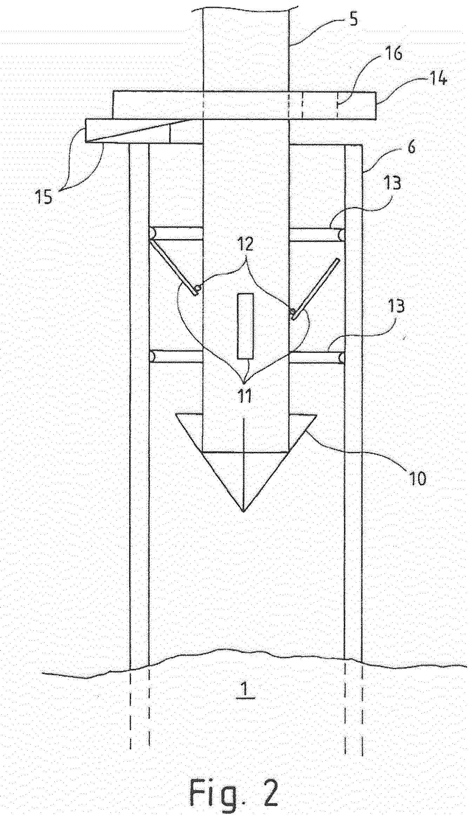

In Figur 2 ist in einer schematischen Ansicht eine Verankerungsanordnung für eine Gründungsstruktur für eine Windenergieanlage dargestellt, bei welcher Bewegungen des Tragpfostens 5 während des Aushärtens nicht oder zumindest nicht mehr im bisherigen Maße auftreten können. Es ist wiederum eine als hohler Gründungspfahl 6 ausgeführte Aufnahmestruktur dargestellt, welche im Meeresboden 1 eingesenkt ist. In den Gründungspfahl 6 ist ein Tragpfosten 5 der in dieser Darstellung der Figur 2 nicht weiter gezeigten Gründungsstruktur eingeführt.

Am freien Ende des Tragpfostens 5 sind Fahnenbleche 10 angeordnet. Diese Fahnenbleche dienen zum Einen zum leichteren Einführen des Tragpfostens 5 in den Gründungspfahl 6, zum Anderen stellen sie einen Mindestabstand zwischen Tragpfosten 5 und Gründungspfahl 6 in allen Richtungen sicher, der für eine feste Vergroutung notwendig ist.

Am Umfang des Tragpfostens 5 sind mehrere Fixierungselemente in Form von schräg angestellten Blechen 11 mittels vorgespannter beweglicher Befestigungen 12 angebracht. Die Vorspannung ist dabei so gewählt, dass die Bleche nach außen in Richtung der Innenwandung des Gründungspfahls gedrückt werden. Die Bleche 11 sind in Längsrichtung des Tragpfostens 5 gegeneinander höhenversetzt angeordnet. Anstelle einer Vorspannung können die Befestigungen auch so ausgeführt sein, dass die Bleche 11 durch ihr Eigengewicht nach außen kippen.

An der Innenwandung des Gründungspfahls 6 sind ebenfalls Fixierelemente in Form von ringförmigen Stahleinlagen 13 vorgesehen. Diese Stahleinlagen 13 sind mit dem Gründungspfahl auf geeignete Weise verbunden, z.B. durch Schweißung. Als Stahleinlagen 13 können auch die im Stand der Technik bekannten Schubrippen (shear keys) dienen, die zur Erreichung der Tragfestigkeit der Groutverbindung eingesetzt werden können.

Wenn der Tragpfosten 5 nach unten in den Gründungspfahl 6 abgesenkt wird, gleiten die Bleche 11 an der Innenwandung des Gründungspfahles 6 entlang und über die Stahleinlagen 13 hinweg. Sobald der Tragpfosten seine Sollposition erreicht hat, kann eine entgegen der Absenkrichtung wirkende Zugkraft auf den Tragpfosten 5 ausgeübt werden. Hierzu werden zwischen dem oberen Ende des Gründungspfahls 6 und einer am Tragpfosten 5 befestigten Konsole mit der Funktion einer Stopperplatte 14 Spannkeile 15 eingepresst. Durch die nach oben wirkende Zugkraft fassen die Bleche 11 hinter die Stahleinlagen 13, so dass der Tragpfosten 5 fest in dem Gründungspfahl 6 verspannt wird und sich unter Einfluss der durch normalen Seegang auf die Gründungsstruktur 3 einwirkenden Kräfte nicht oder kaum noch bewegen kann.

Prinzipiell kann auf die Stahleinlagen 13 verzichtet werden, wenn die Bleche 11 so ausgeführt sind, dass sie sich an dem Gründungspfahl 6 selbsthemmend verspannen. Wird die Gründungsstruktur 3 anstelle von Gründungspfählen 6 in Grundbohrungen verankert, so entfallen die Stahleinlagen 13 zwangsläufig. Hier verspannen sich die Bleche 11 zumeist ohne Schwierigkeiten an Unebenheiten der Bohrungsinnenwand.

Anschließend wird durch eine in der Konsole mit der Funktion einer Stopperplatte 14 vorgesehene Öffnung 16 eine Groutleitung verlegt oder eine bereits vorinstallierte Groutleitung genutzt, durch welche dann die Füllmasse (z.B. Beton) in das Innere des Gründungspfahls 6 gepumpt wird. Diese kann in Ruhe bis zum Erreichen der gewünschten Festigkeit aushärten.

## Patentansprüche

1. Verfahren zum Verankern einer Gründungsstruktur (3) im Meeresboden (1) mit den Schritten: Einbringen von wenigstens einer Aufnahmestruktur (6) in den Meeresboden, Absenken wenigstens eines Tragpfostens (5) der Gründungsstruktur (3) in die wenigstens eine Aufnahmestruktur (6), Herstellen einer Verbindung zwischen Aufnahmestruktur (6) und Gründungsstruktur (3) durch Verfüllen der Aufnahmestruktur (6) mit einer aushärtbaren Füllmasse (7) und Aushärten der aushärtbaren Füllmasse (7), wobei vor dem Verfüllen der Aufnahmestruktur (6) mit der aushärtbaren Füllmasse (7) der Tragpfosten (5) in der Aufnahmestruktur (6) fixiert wird, **dadurch gekennzeichnet, dass** die Fixierung mittels am Tragpfosten (5) angeordneter Fixierungselemente (11) erfolgt, die als elastische, schräg angestellte Bleche (11) ausgeführt sind.

2. Verfahren nach Anspruch 1, **dadurch gekennzeichnet, dass** die Bleche (11) in Richtung der Längsachse des Tragpfostens (5) gegeneinander höhenversetzt angeordnet sind.

3. Verfahren nach einem der Ansprüche 1 bis 2, **dadurch gekennzeichnet, dass** die Fixierung mittels an der Aufnahmestruktur (6) angeordneter Fixierungselemente (13) erfolgt.

4. Verfahren nach Anspruch 3, **dadurch gekennzeichnet, dass** die an der Aufnahmestruktur (6) angeordneten Fixierungselemente (6) als ringförmige Stahleinlagen (6) ausgeführt sind.

5. Verfahren nach einem der Ansprüche 1 bis 4, **dadurch gekennzeichnet, dass** zum Fixieren eine entgegen der Absenkrichtung des Tragpfostens (5) wirkende Zugkraft auf den Tragpfosten (5) ausgeübt wird, bevor die Aufnahmestruktur mit der Füllmasse verfüllt wird.

6. Verfahren nach Anspruch 5, **dadurch gekennzeichnet, dass** die Zugkraft über zwischen einer Oberkante der Aufnahmestruktur (6) und einer an dem Tragpfosten (5) vorgesehenen Konsole mit der Funktion einer Stopperplatte (14) eingebrachte Spannkeile (15) aufgebracht wird.

7. Gründungsstruktur (3) insbesondere für eine Offshore-Windenergieanlage zur Verankerung im Meeresboden (1) mit wenigstens einem in eine Aufnahmestruktur (6) einzuführenden Tragpfosten (5), der Fixierungselemente (11, 20) zur vorübergehenden Fixierung in der Aufnahmestruktur (6) vor Ausführen des Grouting aufweist, **dadurch gekennzeichnet, dass** die Fixierungselemente (11) als elastische, schräg angestellte Bleche (11) am Tragpfosten (5) angeordnet sind.

8. Gründungsstruktur nach Anspruch 7, **dadurch gekennzeichnet, dass** die Bleche (11) in Richtung der Längsachse des Tragpfostens (5) gegeneinander höhenversetzt angeordnet sind.

9. Gründungsstruktur nach Anspruch 8, **dadurch gekennzeichnet, dass** am Tragpfosten (5) eine Konsole mit der Funktion einer Stopperplatte (14) vorgesehen ist.

## Claims

1. Method for anchoring a foundation structure (3) in the seabed (1), comprising the following steps: introducing at least one receiving structure (6) into the seabed, lowering at least one support post (5) of the foundation structure (3) into the at least one receiving structure (6), producing a connection between the receiving structure (6) and foundation structure (3) by filling the receiving structure (6) with a curable filling compound (7), and curing the curable filling compound (7), wherein the support post (5) is fixed in the receiving structure (6) prior to filling the receiving structure (6) with the curable filling compound (7), **characterized in that** the fixing operation is achieved by means of fixing elements (11) arranged on the support post (5) which fixing elements (11) are designed as elastic, obliquely positioned metal sheets (11).

2. Method according to Claim 1, **characterized in that** the metal sheets (11) are arranged with a height offset with respect to one another in the direction of the longitudinal axis of the support post (5).

3. Method according to either of Claims 1 and 2, **characterized in that** the fixing operation is achieved by means of fixing elements (13) arranged on the receiving structure (6).

4. Method according to Claim 3, **characterized in that** the fixing elements (6) arranged on the receiving structure (6) are designed as annular steel inserts (6).

5. Method according to one of Claims 1 to 4, **characterized in that,** for fixing purposes, a pulling force acting counter to the direction of lowering of the support post (5) is exerted on the support post (5) before the receiving structure is filled with the filling compound.

6. Method according to Claim 5, **characterized in that** the pulling force is applied via tensioning wedges (15) introduced between an upper edge of the receiving structure (6) and a bracket with the function of a stopper plate (14) that is provided on the support post (5).

7. Foundation structure (3), in particular for an offshore wind turbine, for anchoring in the seabed (1), comprising at least one support post (5) to be introduced into a receiving structure (6), which the support post (5) has fixing elements (11, 20) for temporarily fixing in the receiving structure (6) before grouting is carried out, **characterized in that** the fixing elements (11) are arranged on the support post (5) as elastic, obliquely positioned metal sheets (11).

8. Foundation structure according to Claim 7, **characterized in that** the metal sheets (11) are arranged with a height offset with respect to one another in the direction of the longitudinal axis of the support post (5).

9. Foundation structure according to Claim 8, **characterized in that** a bracket with the function of a stopper plate (14) is provided on the support post (5).

## Revendications

1. Procédé d'ancrage d'une structure de fondation (3) dans le fond sous-marin (1), le procédé présentant les étapes suivantes :
placement d'au moins une structure de réception (6) dans le fond sous-marin,
descente d'au moins un mât de support (5) de la structure de fondation (3) dans la ou les structures de réception (6),
établissement d'une liaison entre la structure de réception (6) et la structure de fondation (3) par remplissage de la structure de réception (6) d'une pâte de charge durcissable (7) et durcissement de la pâte de charge durcissable (7),
le mât de support (5) étant immobilisé dans la structure de réception (6) avant le remplissage de la structure de réception (6) par la pâte de charge durcissable (7),
**caractérisé en ce que**
la fixation s'effectue au moyen d'éléments de fixation (11) disposés sur le mât de support (5) et réalisés sous la forme de tôles élastiques (11) placées obliquement.

2. Procédé selon la revendication 1, **caractérisé en ce que** les tôles (11) sont disposées à un décalage mutuel en hauteur dans la direction de l'axe longitudinal du mât de support (5).

3. Procédé selon l'une des revendications 1 et 2,
**caractérisé en ce que** la fixation s'effectue au moyen d'éléments de fixation (13) disposés sur la structure de réception (6).

4. Procédé selon la revendication 3, **caractérisé en ce que** les éléments de fixation (6) disposés sur la structure de réception (6) sont configurés sous la forme de garnitures annulaires (6) en acier.

5. Procédé selon l'une des revendications 1 à 4,
**caractérisé en ce que** pour la fixation, une force de traction qui agit en opposition à la direction de descente du mât de support (5) est exercée sur le mât de support (5) avant que la structure de réception soit remplie de la pâte de charge.

6. Procédé selon la revendication 5, **caractérisé en ce que** la force de traction est appliquée par l'intermédiaire d'un biseau de serrage (15) inséré entre le bord supérieur de la structure de réception (6) et une console prévue sur le mât de support (5) et qui joue le rôle d'une plaque d'arrêt (14).

7. Structure de fondation (3), en particulier pour éolienne Offshore, destinée à l'ancrage dans le fond sous-marin (1) et présentant au moins un mât de support (5) qui doit être inséré dans la structure de réception (6), le mât de support présentant des éléments de fixation (11, 20) permettant une fixation temporaire dans la structure de réception (6) avant la réalisation du scellement,
**caractérisée en ce que**
les éléments de fixation (11) sont disposés sur le mât de support (5) et réalisés sous la forme de tôles élastiques (11) placées obliquement.

8. Structure de fondation selon la revendication 7,
**caractérisée en ce que** les tôles (11) sont disposées à un décalage mutuel en hauteur dans la direction de l'axe longitudinal du mât de support (5).

9. Structure de fondation selon la revendication 8,
**caractérisée en ce qu'**une console jouant le rôle d'une plaque d'arrêt (14) est prévue sur le mât de support (5).
